**Europäisches Patentamt**

**European Patent Office**

**Office européen des brevets**

(19)

(11) **EP 1 524 611 A2**

(12) **EUROPEAN PATENT APPLICATION**

(43) Date of publication:
**20.04.2005 Bulletin 2005/16**

(51) Int Cl.⁷: **G06F 17/30**

(21) Application number: **04104871.1**

(22) Date of filing: **05.10.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | (72) Inventor: **Pennanen, Petrus**<br>**00150, Helsinki (FI)** |
| (30) Priority: **06.10.2003 FI 20031453** | (74) Representative: **Äkräs, Tapio Juhani**<br>**Kolster Oy Ab,P.O. Box 148,**<br>**Iso Roobertinkatu 23**<br>**00121 Helsinki (FI)** |
| (71) Applicant: **Leiki Oy**<br>**Fin-00130 Helsinki (FI)**<br>Designated Contracting States:<br>**AT BE BG DE DK** | |

(54) **System and method for providing information to a user**

(57)    A method and an arrangement for providing information to a user, the arrangement comprising input means (11) configured to receive inputs from a user (10); processing means (12) configured to create a user profile on the basis of one or more inputs from the user and select one or more content items on the basis of the user profile; and output means (14) configured to provide the user with the content of the selected one or more content items, wherein the processing means (12) are configured to create the user profile by profiling a textual content of one or more inputs from the user on the basis of a predetermined ontology (13), create content profiles for two or more content items by profiling a textual content of the content items on the basis of the predetermined ontology (13), select one or more content items having a content profile most similar to the user profile.

Fig. 1

EP 1 524 611 A2

**Description**

FIELD OF THE INVENTION

The present invention relates to an arrangement and a method for providing information to a user.

BACKGROUND OF THE INVENTION

Current information systems can provide a huge amount of information relating to various services, for example. Examples of such systems include computer systems and mobile systems. For example, a mobile station or a computer terminal typically has a user interface, which enables a user of such a device to search and retrieve information. Furthermore, if the device is connected to a network or similar system such as Internet, the user can have an access to information and services provided by the network. These services can then provide the user with various information i.e. content relating to the service in question. The information can be delivered to the user via the user interface.

As the amount of available information is continually growing, it is becoming more and more important to be able to efficiently provide the user with only such information that is relevant to the particular user and corresponds to the needs of the user.

Document US 5890152 discloses one solution for searching, retrieving and evaluating information on a computer network. The solution disclosed is based on using a personal profile comprising profile objects representing the interests of a user for evaluating and selecting media files.

A problem associated with the above solution is that it does not take into account possible associations between subjects represented by different profile objects when selecting media files.

Document WO 0210980 discloses a concept-based search and retrieval system in which an ontological parser is utilized in finding documents that match concepts behind user queries. Document US 6,453,315 discloses a similar solution.

A problem associated with the above solutions is that the disclosed solutions do not adapt themselves to the requirements of a particular user.

BRIEF DESCRIPTION OF THE INVENTION

An object of the present invention is thus to provide an arrangement and a method so as to overcome or at least to alleviate the above problem. The objects of the invention are achieved by an arrangement and a method, which are characterized by what is stated in the independent claims 1 and 12. The preferred embodiments of the invention are disclosed in the dependent claims.

The invention is based on the idea of forming profiles of a textual content of one or more inputs from the user and two or more content items on the basis of a predetermined ontology and providing the user with the content of content item or items having a content profile most similar to the user profile. Term ontology generally refers to a hierarchical semantic structure of interconnected categories. In addition, the invention is based on the idea of adjusting the user profile gradually on the basis of further inputs from the user and using the adjusted user profile for the selecting of content items.

An advantage of the arrangement and method of the invention is that they enable efficiently providing a user with information that corresponds best to the interests and needs of the user. In particular, the invention provides an adaptive way of providing the user with the most appropriate information.

BRIEF DESCRIPTION OF THE DRAWINGS

In the following the invention will be described in greater detail by means of preferred embodiments with reference to the attached [accompanying] drawings, in which

Figure 1 is a block diagram of an exemplary system in which the invention can be used;
Figure 2 is a flow diagram of the content profiling process according to an embodiment of the invention;
Figure 3 is an example of a category of an ontology and its associated patterns;
Figure 4 is an exemplary illustration of one section in a general news ontology;
Figure 5 is a diagram of the user profile adjustment process according to an embodiment of the invention; and
Figure 6 is diagram illustrating the phases of the user input handling procedure according to an embodiment of the invention.

DETAILED DESCRIPTION OF THE INVENTION

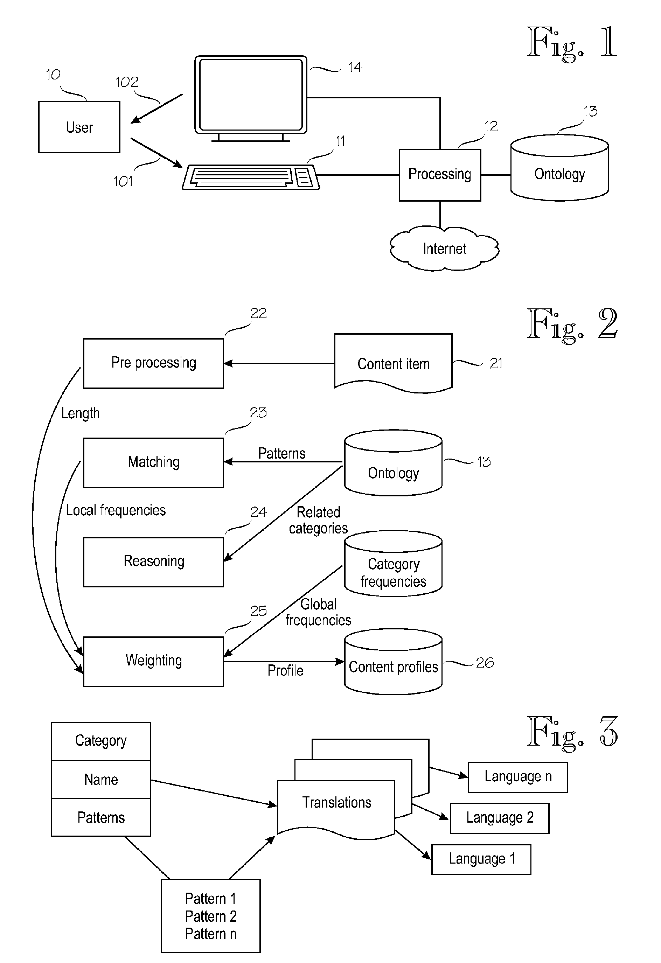

Figure 1 is illustrates a block diagram of a system in which the invention can be used. User 10 provides an input 101 to the system via input device 11. Input device 11 can be any suitable device capable of receiving user input comprising textual content or content that can be converted into textual form, such as a keyboard, a mouse, a touch pad, a video camera or a microphone. The user input is delivered to a processing unit 12, which is according to an embodiment of the invention configured to create a user profile by profiling a textual content of one or more inputs from the user 10, create content profiles for two or more content items by profiling a textual content of the content items and select one or more content items having a content profile most similar to the user profile. It should be noted that term input (from the user) should be understood broadly to cover not only explicit input and feedback (e.g. content ratings) from the user but also implicit feedback from the user e.g. in the form of user simply viewing a content item. The processing unit 12 is further configured to profile the textual content on the basis of a predetermined ontology. The ontology is represented in the exemplary system as a database 13 connected to the processing unit 12 but could be integrated in the processing unit 12 or some other system element as well. The processing unit 12 may produce the content items but it is also possible that it receives the content from another instance connected thereto via Internet, for example. In other words, the processing unit 12 may provide just a user interface to a separate service or a device (not shown in the figure) connected to the processing unit 12 such that the processing unit 12 only selects the most appropriate content to be delivered to the user 10 from among content items originally provided by such a separate service or device. The content of the selected content item is then preferably delivered 102 to the user 10 via suitable output device 14 such as a display device or a loudspeaker. It should be noted that the system shown is merely one example of a suitable system in which the invention can be used. All the functions provided by the input device 11, processing unit 12, ontology 13 and output device 14 can be integrated into a si n-gle device such as a mobile station or a computer unit (e.g. a personal computer or a personal digital assistant). Alternatively, a mobile station or a computer unit can include only some of the functions, such as the input device 11 and output device 14, while the rest of the functions are provided by other system elements of a mobile system or a computer system respectively. The functionality according to the invention can be implemented by means of suitable software in existing devices or systems. It is also possible to implement the invention by means of specific integrated circuits, for example. This however has no relevance to the basic idea of the invention.

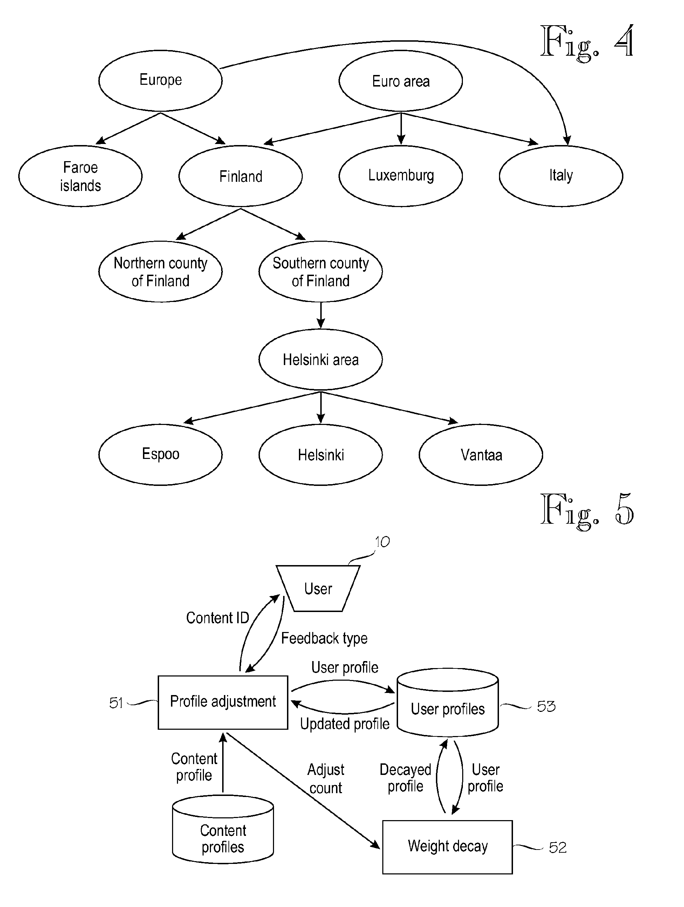

The ontology 13 generally refers to a hierarchical semantic structure of interconnected categories. The user input and content profiling processes according to the invention described in more detail later are guided by an o n-tology. The ontology contains concepts that are relevant in the domain and patterns for identifying those concepts in the content. For an introduction to ontologies and ontological engineering, a reference is made to document: Guarino, N.; "Formal Ontology and Information Systems"; Formal ontology in information systems. Proceedings of FOIS'98, Trento, Italy, 6-8 June 1998. The ontology used in the system according to an embodiment of the invention consist of a set of patterns, a set of categories, references associating patterns to categories and relations associating categories and forming a tree structure. A pattern is typically a word, multiple words or a regular expression. Categories denote concepts in the domain. Patterns are associated with categories. They guide the extraction of concepts from the content items in the process of content profiling. Categories and patterns may have translations to other languages enabling multilinguality. Figure 3 shows an example of a category and its associated patterns with translations to different languages. A category typically has one or more connections with other categories denoting the semantic relationships between the concepts in the domain. The result is a directed acyclic graph, where nodes represent concepts and connections between them represent their generalization hierarchy. Figure 4 is an exemplary illustration of one section in a general news ontology (not all connections are shown in the figure). Figure 4 shows a typical generalization hierarchy where concepts are generalized when traversing up in the tree. The nature of the connection between parent and children depends on the semantic structure of the ontology and is not limited to only generalization relationship.

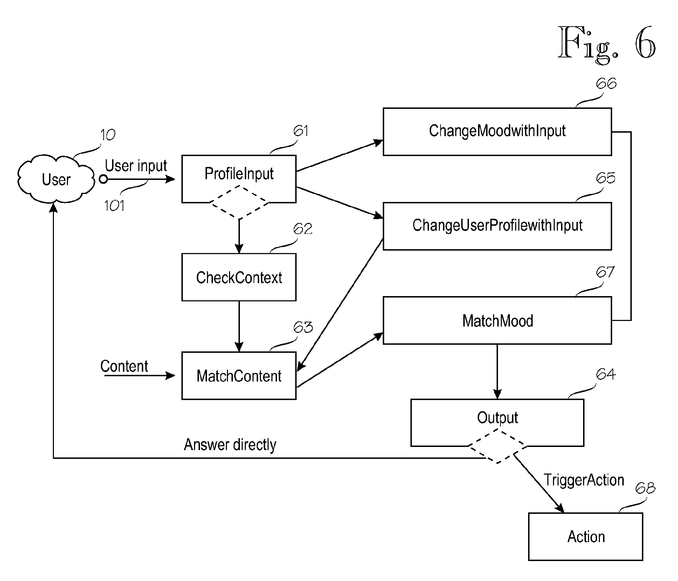

Figure 6 illustrates the phases of the user input handling procedure according to an embodiment of the invention. The user 10 provides an input 101, which is profiled (phase 61). The profile of the input is then preferably used for creating or adjusting (phase 65) a user profile. In phase 62, context may be fetched from previous inputs/outputs if the input profile is short or does not comprise enough categories from the various parts of the ontology to explain the semantic elements of a complete sentence. In phase 63, a matching content can be determined on the basis of either the profile of the input or the adjusted user profile depending on the particular service or application the invention is used for. The matching content is then outputted 64 to the user 10 or alternatively/in addition a special action (phase 68) is triggered in response to the matching content. According to an embodiment of the invention, a mood (such as happy/unhappy or positive/negative) of the user 10 is determined on the basis of the textual content of the input 101 in profiling phase 61. This can be done e.g. by determining a mood that the profile of the textual content of the input best matches to. This mood information is then used for adjusting (phase 66) one or more mood parameters. These mood parameters can be used for formulating (step 67) the content to be outputted to the user 10 such that it e.g. corresponds to the determined mood of the user 10. For example, if the determined mood of the user is happy, the content to be outputted to the user 10 may be different than if the mood was unhappy. The various phases are described in more detail in the following.

CONTENT PROFILING

A content profile can be seen as a semantic metadata for a content item. A profile preferably consists of a set of categories associated with weights. The amount of weight preferably denotes the relevancy of that category so the more weight a category has the more relevant that category is for that profile. The frequency of a category in a content item can be calculated by matching the patterns in the ontology to the content. Each match increases the frequency of the associated categories. A weight for a category can be determined according to its frequency in the content item and according to its relative importance in the document collection as a whole. A set of selected categories for the profile is preferably expanded according to the connections in the ontology so that the categories with the relation to the matched category are added to the profile. The expanded categories are preferably weighted according to their distance to the matched categories as well as according to its relative importance in the document collection as a whole. The lengths of the content profiles are preferably normalized in order to avoid long content items to dominate over shorter ones in the matching process.

Figure 2 illustrates a flow diagram of the content profiling process according to an embodiment of the invention. The profiling starts with parsing the content item 21 in the pre-processing phase 22. Text is preferably tokenized so that words and punctuation marks can be recognized as separate entities. The result is an ordered list of terms, which is delivered to the pattern matching process 23. Pattern matching 23 matches patterns obtained from the ontology 13 against the incoming wordlist. For each match, the corresponding category's hit count (Local frequency) is preferably increased.

For example if the text contains word airport in singular or a plural form, a pattern "airport*" will match them both. Because of tokenization, the pattern "hillary clinton" will match "Hillary Clinton" despite the capitalization and also the genitive form "Hillary Clinton's". Case sensitive matching is possible by using regular expressions. A regular expression "US" will match only on capital letters. Patterns "President * Clinton" and "Clinton * President" will activate the corresponding category if the terms President and Clinton occur in the same content item despite the distance between them. More complex regular expressions can be used for achieving even better accuracy or for extracting deeper knowledge from the content item. As an example of a more advanced pattern matching consider a regular expression i.e. a pattern describing a certain amount of text:

$$w+@[a\text{-}zA\text{-}Z\_]+?\backslash.[a\text{-}zA\text{-}Z]\{2,3\},$$

which could be used for recognizing an email address in the text. The names of the categories are used as patterns by default. Since the majority of the patterns are simple words, the performance of the profiling process can be kept at a satisfying level.

The result is a set of matched categories with weights. The weight of the category denotes the frequency of the appearance of the corresponding concept in the content item. The set of categories is preferably expanded in the reasoning phase 24 so that for each matched category the relevant categories according to the ontology 13 are added to the set. In the simplest form, the parents of the matched category are retrieved from the ontology 13. More advanced reasoning can be achieved by adding ontology specific rules for activating relations.

Since not all categories are equally relevant when measuring the similarity of two profiles, categories can be weighted (phase 25) according to their information content. A preferable method to be used is called inverse document frequency (idf). The idf measure determines the relative importance of that concept for the domain in comparison to other categories in the ontology. Basically, it gives higher weights for those categories that are rare and, as such, contribute more to the unique characteristic of that content item. This requires storage of the category frequencies 27, i.e. the counts of content items belonging to a category.

Normalization of weights w by information value can be performed by equation (1):

$$w' = w\log\frac{N_0}{N}, \tag{1}$$

where:

N : Count of content items belonging to a category
$N_0$ : Count of all content items

$N_0/N$ : Global frequency of a category.

Since long content items are more likely to contain more categories, length normalization is preferably performed. This can be done by scaling the weights w in the profile with the length (norm) of the vector v according to equation (2):

$$w' = \frac{w}{\sqrt{\sum_{v \in W} v^2}} \ , \qquad\qquad (2)$$

where:

w : Set of weights in the profile

The resulting content profile is preferably stored in a content profile database 26 for later use in e.g. the matching phase 63.

USER PROFILING

A user profile is created by profiling one or more inputs from the user 10. A textual content of a user input 101 can be profiled in the same way as the content profiling described above. User's profile can be updated or adjusted according to the user's actions towards the content items, for example. These can be explicit feedbacks and ratings from the user 10 and implicit feedback in the form of simply viewing an item. User profile generated in this way reflects not only the user behavior but also the actual subjects of the user interests. User profiling can be an ongoing process. It preferably starts when the user 10 uses the system for the first time. The profile can get more comprehensive and accurate each time the user 10 reads a content item or gives explicit feedback. A user profile (as a content profile) is preferably human interpretable and can be represented in any of the languages supported by the ontology. In order to display a profile, one just needs to fetch the names of the categories in the profile from the ontology and print them along with their corresponding weights.

Figure 5 illustrates a diagram of the user profile adjustment process according to an embodiment of the invention. According to an embodiment of the invention, there are two processes actively updating the user profile: adjustment 51 and weight decay 52. The adjustment process 51 can be performed each time the user 10 provides an input i.e. gives implicit feedback, e.g. displays a content item, or gives explicit input or feedback. The process starts by e.g. the client (i.e. an entity providing a user interface to the user 10) sending an id of the content item the feedback is given on with the type of feedback to the user profiler. The user profile is fetched from the memory and profile adjustment is performed. The profile adjustment for each category can be calculated as shown below:

if w=0:

$$w' = fb * r / MAX\_FB;$$

else:

$$w' = w + fb * (MAX\_WEIGHT\text{-}sgn(fb)*w) * r / MAX\_FB,$$

where:

fb: given feedback factor, i.e. a positive or negative value signifying the user's reaction to the content item;
w: the weight of a category in the user profile before the feedback is given;
r: corresponding weight at feedback target content profile;
MAX_FB: fixed value for maximum feedback;
MAX_WEIGHT: fixed value for maximum weight for a category;
sgn(fb): the sign of fb.

Feedback strength can be adjusted according other metrics observed from user behavior such as the time the user spent with the content item (not shown in figure 5). After the adjustment, the adjust count is preferably increased.

In order to avoid over-developing of profile, weights are preferably decayed by time. This also enables the system to better adjust to user's changing preference since weights for previously interesting but later disinteresting categories are slowly decreasing. Decay is preferably accomplished by decreasing the weight of all of the categories at predetermined intervals e.g. after some fixed amount of profile adjustments. In figure 5, the weight decay process 52 receives the adjust count from profile adjustment process 51. From that count, the decay process 52 can choose whether to decay or not. A user profile can be shared by many users, which can be used for social filtering.

MATCHING

Matching of two profiles, e.g. a user profile and a content profile results a similarity value. The higher the value the more similar the two profiles are according to the similarity measure used. The similarity measure used according to an embodiment of the invention is a normalized dot product. For example, the similarity value between two profiles A and B, when a profile is a vector comprising the weights of the categories in the profile, can be calculated as:

$$sim(A,B) = \frac{\sum (a_i * b_i)}{\sqrt{|A| * |B|}}, \qquad (3)$$

where:

ai: ith index in profile A;
bi: ith index in profile B;
|A|: the length of the vector A;
|B|: the length of the vector B.

The lengths of the profiles are preferably included in the similarity value calculation so that the longer the profile the smaller the similarity value gets. In a case of having two different profiles with equal dot product value, the one with less categories is probably more focused in the relevant subjects and thus should get bigger similarity value. The length of a vector A can be calculated as:

$$|A| = \sqrt{\sum a_i^2} \qquad (4)$$

User (or user input) profiles and content profiles can be matched i n-terchangeably so that a user profile can be matched to the content profiles or other user profiles and vice versa. As profiles are language independent, all the matching can be done with the content items written in different languages supported by the ontology.

CONTENT DELIVERY

Content can be delivered to the user 10 by push or pull, for example. When content is pulled, a unique identifier of the user is preferably transferred to a content server or corresponding entity having an access to content. The server identifies the user profile associated with the identifier and matches the user profile with other profiles, e.g. content profiles, in the system creating a list of best matching profiles. The server then returns the desired number of profiles as matches. In the push setting, the user is pushed the content she/he is most likely interested in. This is accomplished by matching the user profile against each of the incoming content profiles and the ones whose similarity value exceeds the user's matchlimit value are preferably pushed to the user. The matchlimit value is preferably adjusted for each user separately by observing the distribution of the similarity values between the user profile and content items in the history. The user can give feedback for pushed content items resulting to the adjustment of the user profile according to the profile of the pushed content. The user can preferably control the amount of content being pushed by specifying a percentage or a number of items pushed per day.

DIFFERENT SETUPS

Three different setups can be used with the invention: a server-based setup, a client based setup and a distributed client/server setup.

On a server-based setup, all the functionalities of the system are implemented on a server. The client is a thin client with capabilities only for displaying the content. The procedure between the client and the server preferably goes as indicated below:

- The client makes a request to the server with a unique user id
- The server loads the user profile associated with the id and constructs the list of best matching content items according to similarity calculations.
- The server sends most similar content items to the client.
- The client displays the content to the user and sends feedbacks (according to user's behavior) to the server
- The server adjusts user's profile according to feedbacks

On a client-based setup, all the functionalities of the system are implemented on the client. The client will be served content during the usage of the system or content can be installed on the client beforehand. The client will preferably form content profiles as described in the section "Content profiling". The client preferably observes the user's actions toward content and forms a user profile as described in the section "User profiling". Optionally, user may be given a tool to adjust her profile manually. The client can display personalized content to the user by matching user and content profiles as described in "Matching".

On a distributed client/server setup, the functionalities of the system are implemented partly on the client and partly on the server. Typically the server part is responsible for content profiling and delivering content to the clients. The client preferably contains the user profile and mechanisms for matching the user profile against content profiles. The server may send content items or just content profiles. When only content profiles are sent, the client will match the profiles against the user profile and request the best matching content items from the server. If the user profile is stored only on the client, a high level of privacy can be achieved. Bandwidth can be saved since only the profiles of the unwanted content items needs to be sent from the server to the client.

It will be obvious to a person skilled in the art that, as the technology advances, the inventive concept can be implemented in various ways. The invention and its embodiments are not limited to the examples described above but may vary within the scope of the claims.

**Claims**

1.   An arrangement for providing information to a user, the arrangement comprising:

input means (11) configured to receive inputs from a user (10);
processing means (12) configured to:

create a user profile on the basis of one or more i n-puts from the user by profiling a textual content of one or more inputs from the user on the basis of a predetermined ontology (13);
create content profiles for two or more content items by profiling a textual content of the content items on the basis of the predetermined ontology (13); and
select one or more content items having a content profile most similar to the user profile; and

output means (14) configured to provide the user with the content of the selected one or more content items;

**characterized in that** the processing means (12) are further configured to:

adjust the user profile when the user provides one or more further inputs; and
select one or more content items having a content profile most similar to the adjusted user profile.

2.   An arrangement according to claim 1, **characterized in that** the processing means (12) are further configured to:

determine a mood of the user by profiling a textual content of one or more inputs from the user on the basis of a predetermined ontology (13);
adjust at least one mood parameter on the basis of the determined mood of the user; and
formulate the content to be outputted to the user on the basis of the at least one mood parameter.

3. An arrangement according to claim 1 or 2, **characterized in that** the predetermined ontology (13) comprises two or more categories, whereby the processing means (12) are configured to profile the textual content by determining a weight for each of the categories, the weight indicating the relevancy of the category in question to the textual content.

4. An arrangement according to claim 3, **characterized in that** each category is associated with one or more patterns, whereby the processing means (12) are configured to determine a weight for a category by matching the one or more patterns to the textual content such that each match of a pattern associated with the category within the textual content i ncreases the weight of the category.

5. An arrangement according to claim 3 or 4, **characterized in that** one or more of the categories comprise one or more subcategories in one or more levels, whereby the processing means (12) are configured to determine the weight for each such category by taking also into account the relevancy of the one or more subcategories to the textual content.

6. An arrangement according to claim 5, **characterized in that** each category and subcategory is associated with one or more patterns, whereby the processing means (12) are configured to determine a weight for a category by matching the one or more patterns to the textual content such that each match of a pattern associated with the category or a subcategory thereof within the textual content increases the weight of the category.

7. An arrangement according to claim 4 or 6, **characterized in that** the processing means (12) are configured to:

count the number of times a category appears in the textual content; and
adjust the weight of the category inversely proportionally to the counted number.

8. An arrangement according to any one of claims 3 to 7, **characterized in that** the processing means (12) are configured to:

adjust the user profile by reducing the weights of the categories in the user profile at predetermined intervals; and
use the adjusted user profile for the selecting of one or more content items.

9. An arrangement according to any one of claims 3 to 8, **characterized in that** the user profile and a content profile is a vector comprising the weights of the categories.

10. An arrangement according to claim 9, **characterized in that** the processing means (12) are configured to use a normalized dot product between the user profile and a content profile as a measure of the similarity between the user profile and the content profile.

11. An arrangement according to any one of claims 1 to 10, **char** acterized in that the arrangement is one of the following: a mobile system, a mobile station, a computer system.

12. A method for providing information to a user, the method comprising the steps of:

creating a user profile on the basis of one or more inputs from a user by profiling a textual content of one or more inputs from the user on the basis of a predetermined ontology (13);
creating content profiles for two or more content items by profiling a textual content of the content items on the basis of the predetermined ontology (13);
selecting one or more content items having a content profile most similar to the user profile; and
providing the user with the content of the selected one or more content items;

**characterized by**
adjusting the user profile when the user provides one or more further inputs; and

using the adjusted user profile for the selecting of one or more content items.

13. A computer-readable storage medium comprising a computer program set, wherein the execution of the program set in a computer causes the computer to carry out the steps of the method according to claim 12.

Fig. 1

10 — User

102

14

11

101

12 — Processing

13 — Ontology

Internet

Fig. 2

22 — Pre processing

21 — Content item

Length

23 — Matching

Patterns

13 — Ontology

Local frequencies

24 — Reasoning

Related categories

Category frequencies

25 — Weighting

Global frequencies

Profile

26 — Content profiles

Fig. 3

Category

Name

Patterns

Translations

Language n

Language 2

Language 1

Pattern 1
Pattern 2
Pattern n

Fig. 4

Fig. 5

**Fig. 6**